# EUROPEAN PATENT APPLICATION

(11) **EP 1 869 970 A1**
(43) Date of publication of application: **26.12.2007**
(21) Application number: 07110353.5
(22) Date of filing: 15.06.2007
(51) Int. Cl.: A01F 25/20, B65G 15/22

(54) **Conveyor unit for loose material, and apparatus for removing and processing feed for cattle, comprising such a conveyor unit**

(30) Priority: 19.06.2006 NL 2000108
(71) Applicant: Trioliet Mullos B.V., 7575 BE Oldenzaal (NL)
(72) Inventor: Liet, Cornelis Hendricus, 7581 TJ Losser (NL)
(74) Representative: de Vries, Johannes Hendrik Fokke

(57) **Abstract**

The invention relates to a conveying unit for conveying loose material, which is suitable in particular for use in an apparatus for removing and processing silage. The conveying unit comprises a frame (16) and an endless conveyor belt (17,18), which is passed over two return pulley units (21,22) which are rotatably mounted in the frame. One or both return pulley units is (are) provided with two or more return pulleys (23,24) arranged side by side, which are coupled at their facing ends. The return pulleys are each mounted in bearings (28) on a housing disposed between said return pulleys, which housing is supported in the frame (16).

## Description

The invention relates to a conveying unit for conveying loose material, in particular for use in an apparatus for removing and processing silage, comprising a frame aria an endless conveyor belt, which is passer over two return pulley units which are rotatably mounted in the frame.

Dutch parent application No. 1. 028 732 describes an apparatus for removing and processing silage in which -3, conveying unit having a width smaller than the width of the removing unit of the apparatus is used. Because or this, the apparatus must be specially adapted for supplying the removed silage to the conveying unit. Increasing the width of the conveying unit is a problem, because the length of the conveying unit is mainly determined by the height of the mixing container and the inclination of the conveying unit, so that it cannot be increased. Moreover, the diameter of the return pulley unit located at the lower end of the conveying unit is limited, because the insertion plate to which said return pulley unit is contiguous must have a limited height.

The object of the invention is to provide a conveying unit which may have a large width in comparison with its length and which is in particular suitable for use in an apparatus for removing and processing silage.

In order to accomplish that object, the conveying unit according to the invention is characterised in that one or both return pulley units is (are) provided with two or more return pulleys arranged side by side, which are coupled at their facing ends and which are each mounted in bearings on a housing disposed between said return pulleys, which housing is supported in the frame.

In this way a conveying unit is obtained in which the use of a return pulley unit comprising two or more side-by-side return pulleys makes it possible for each housing on which the facing pulley ends are bearing-mounted to be supported in the frame. Said housing supported in the frame prevents deflection of the return pulley unit, so that the correct functioning of the conveying unit is ensured.

The invention also provides an apparatus for removing and processing silage, comprising a mobile chassis with two or more wheels, a removing unit for removing silage from a stocK thereof, and a mixing bin for removed silage, which device is characterised by a conveying unit according to the invention.

According to an advantageous embodiment, the removing unit comprises a pivot arm, which is rotatably supported about a pivot pin at one end and which carries a removing device at its free end, wherein the removing unit can be driven on one side only by means of a cylinder-piston assembly.

The invention will be explained in more detail hereinafter with reference to the drawing, in which a few embodiments of the apparatus according to the invention are very schematically shown.
Fig. 1 is a side view of an apparatus for removing and processing silage equipped with an embodiment of the conveying unit according to the invention;

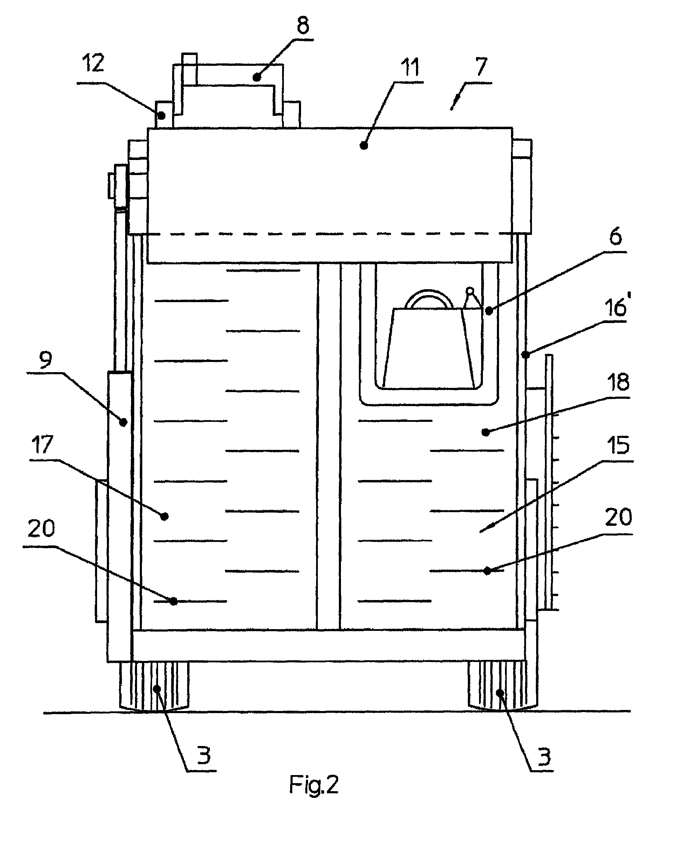

Fig. 2 is a front view of the apparatus of Fig. 1;
Fig. 3 is a front view of the conveying unit that is used in the apparatus of Fig. 1, from which the conveyor belts and the auxiliary belt have been partially left out;
Fig. 4 is a side view of the conveying unit of Fig. 3, a part of which is shown in sectional view along the line A-A;
Fig. 5 is a larger-scale view of the detail V of Fig. 3;
Fig. 6 is a larger-scale view of a part of the conveying unit of Fig. 3 at the location of the section A-A;
Fig. 7 shows the section A-A of Fig. 6;
Fig. 8 shows a detail corresponding to Fig. 5 of an advantageous embodiment of the invention, in which a single, wide conveyor belt is used;
Fig. 9 shows a detail of the embodiment of the conveying unit of Fig, 8;
Fig. 10 is a side view of the detail of Fig. 9 according to the arrow X in Fig. 9.

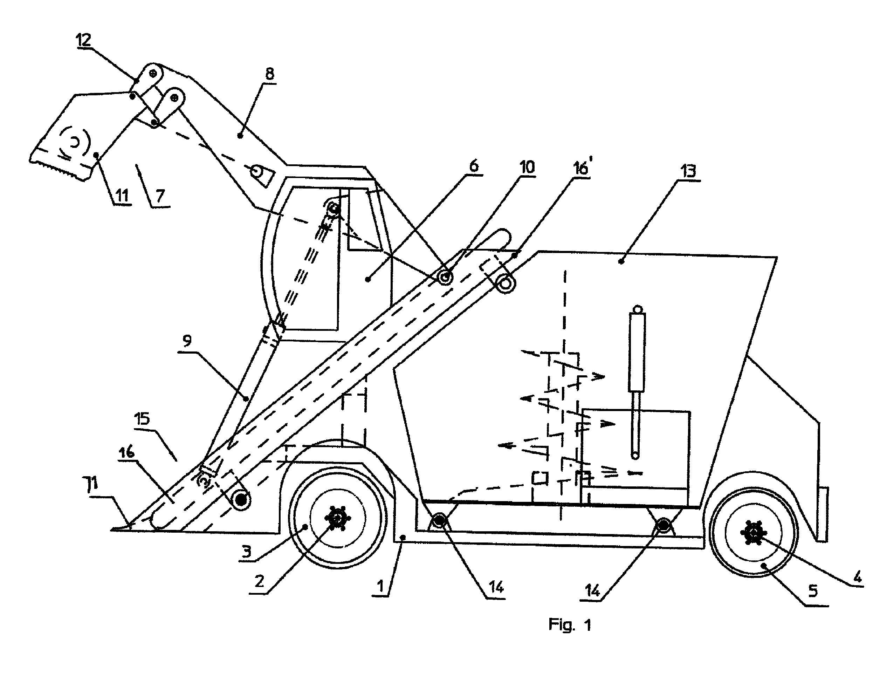

In Fig. 1 a schematic side view is shown of an apparatus for removing and processing silage for cattle, which comprises a mobile chassis 1 provided with a front axle 2 with front wheels 3 and a rear axle 4 with rear wheels 5. The apparatus furthermore comprises a cabin 6 for a driver, who can control all the functions of the apparatus from said cabin. The Front axle 2 of the apparatus shown in Fig. 1 is a driven axle, and the rear wheels 5 can be steered in a manner which is not shown.

The apparatus comprises a removing unit 7 for removing silage from a stock (not shown) thereof. Said removing unit 7 is provided with a pivot arm 6 and can be driven on one side only by means of a cylinder-piston assembly 9 for the purpose of moving the removing unit upwards and downwards. The pivot arm 8 is pivotally supported about a pivot pin 10 at one end and carries a removing device 11 embodied as a cutting board at its free end. Said cutting board 11 is movably connected to the free end of the pivot arm 8 by means of a parallelogram linkage 12. The construction of the removing unit 7 is described in more detail in the aforesaid Dutch patent application No. 1 028 732 and will not be further discussed herein.

The chassis 1 supports a mixing bin 13, whilst weighing sensors 14 of a type that is known per se are provided between the mixing bin 13 and the chassis 1. Said weighing sensors 14, which are provided between the mixing bin 13 and the chassis 1 in a number of four (two on each side of the mixing bin), for example, form part of weighing means (not shown) which also comprise a display screen mounted in the cabin 6.

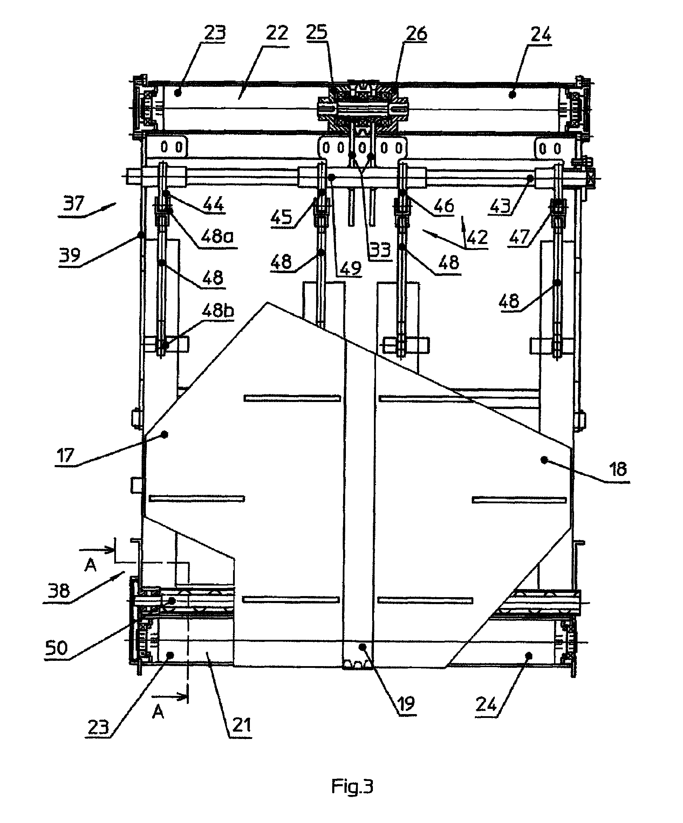

Furthermore, a conveying unit 15 is mounted to the chassis 1, which conveying unit is capable of conveying the silage that the removing unit: 7 has removed from a stock thereof to the mixing bin 13. The conveying unit 15, which is shown in more detail in Figs. 3-7, comprises a frame 16 which is supported in a supporting frame 16' of the apparatus described herein, as is schematically shown in Fig. 1. The conveying unit 15 is mounted in the chassis as a self-supporting unit or cassette, so that mounting and dismounting thereof is comparatively easy.

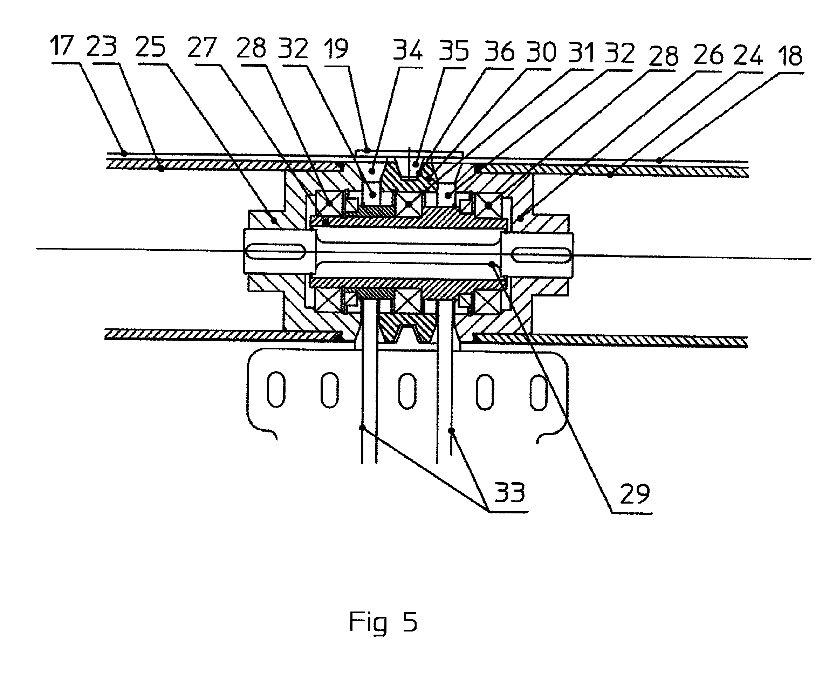

The conveying unit 15 comprises two endless conveyor belts 17,18, whilst an endless auxiliary belt 19 is provided between the conveyor belts 17,18, which auxiliary belt 19 closes the gap between the conveyor belts 17,18. As appears from the front view of Fig. 3, the conveyor belts 17,18 are fitted with carriers 20, whilst the auxiliary belt 19 does not have carriers in this embodiment of the conveying unit 15. It is also possible to fit the auxiliary belt 19 with carriers. The larger-scale detail of Fig. 5 shows that the auxiliary belt 19 extends over the facing edges of the conveyor belts 17,18, being substantially sealingly supported thereon. According to one variant, the auxiliary belt 19 may be connected to one of the conveyor belts 17,18 on one side.

Return pulley units 21,22 are rotatably mounted in the frame 16 of the conveying unit 15 at the bottom side and the upper side thereof, each return pulley unit comprising a return pulley 23 for the conveyor belt 17 and a return pulley 24 for the conveyor belt 18. At their facing ends, the return pulleys 23,24 are each rotatably mounted on a common housing 27 with an end part 25,26 thereof by means of a bearing 28. The end parts 25,26 are coupled by means of coupling spindle 29, which extends through a central opening in the stationary housing 27.

Between the two ena parts 25,26, a return pulley 30 for the auxiliary belt 19 is rotatably mounted on the housing 27 by means of a bearing 31. As is apparent from the detail view of Fig. 5, a slotted free space 32 is present between the return pulley 30 and the end parts 25, 26, into which space 32 mounting brackets 33 project on the side of the frame 16, via which the Housing 27 is supported in the frame 16. On the side remote from the frame 16, a V-beit 34 extends into the free space 32, which V-belt is provided on tne inner side of the conveyor belts 17, 18, near the edge. The V-belt 34 passes through said space 32 with some play. The auxiliary belt 19 is provided with a central V-belt 35 on the inner side, which runs in a correspondingly shaped groove 36 of the return pulley 30. According to one variant it is also possible to provide evenly spaced V-pulleys for the V-belts 34,35.

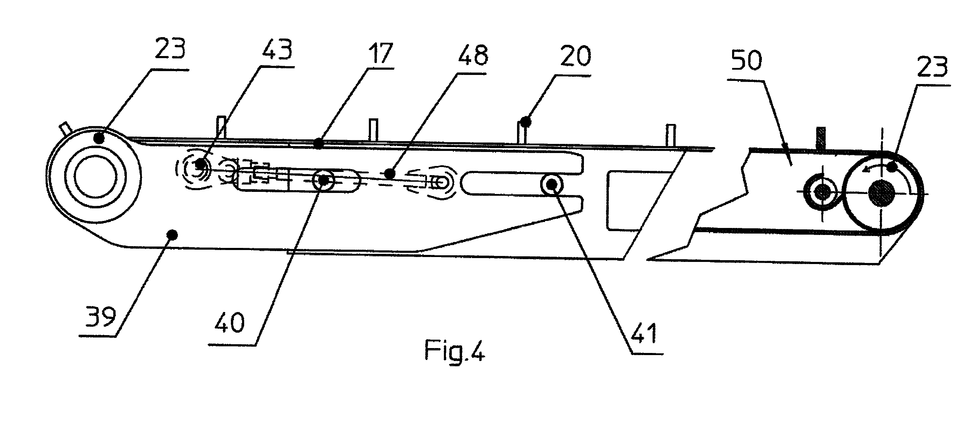

To ensure a correct functioning of the conveyor belts 17,18, the spacing between the two return pulley units 21,22 is adjustable, so that the conveyor belts 17,18 and the auxiliary belt 19 can be given the correct tension. The tension of the conveyor belts on the return pulleys is such that the torque which the return pulleys are capable of transmitting to the conveyor belts will at all times be larger than the maximum driving torque that the drive unit is capable of delivering. Furthermore, the mutual spacing of the return pulleys 23,24 of at least one of the return pulley units 21,22 is adjustable so as to ensure that the conveyor belts 17,18 will run impeccably over the return pulleys 23,24. In the illustrated embodiment of the conveying unit 15, the frame is to that end provided with a frame member 37 which is movable with respect to a fixed frame member 38 that is supported on the apparatus described herein. The return pulley unit 22 is rotatably supported in the movable frame member 37, whilst the return pulley unit 21 is rotatably supported in the fixed frame member 38. The movable frame member 37 comprises two side plates or arms 39, which are movably guided on the frame member 38 by cams 40,41, as is shown in the side view of Fig. 4. In Fig. 4 the movable frame member 37 is shown in its maximally extended position.

Said moving of the frame member 37 with respect to the fixed frame member ,38 is done by means of a tensioning mechanism 42, which is connected to the movable frame member 37 on the one hand and to the fixed frame member 38 on the other hand. Said tensioning mechanism 42 is provided with a tensioning shaft or supporting beam 43, whose ends are rotatably connected to the side plates 39. The tensioning shaft 43 is connected to the fixed frame member 39 at the ends of each return pulley 23,24 by means of levers 44,45,46 and 47, respectively, and an associated tensioning bolt 48 of adjustable length. The tensioning bolts are pivotally connected to the associated lever 44-47 at 48a and to the fixed frame member 38 at the other end.

By rotating the tensioning shaft 43, the side plates 39 are moved over the cams 40,41 in the longitudinal direction of the frame 16 and thus in the longitudinal direction of the conveyor belts 17, 18, so that a correct tension of the conveyor belts and the auxiliary bell can be adjusted. Furthermore it is possible to adjust the length of each tensioning colt 48 individually so as to adjust the position of the return pulleys 23,24 of the return pulley unit 22 relative to the return pulleys 23,24 of the return pulley unit 21. Once the tensioning shaft 43 has been correctly adjusted, the tensioning shaft 43 can be fixed in position with respect to the side plates 39. The return pulleys 23,24 are coupled by means of a flexible coupling spindle 29 at the return pulley unit 22 that is supported in the movable frame member 37, making it possible to adjust the positions of the return pulleys 23,24 independently of each other. Furthermore, the bearings 28 via which the end parts 25,26 are mounted in the common housing 27 are of a type that provides additional play. Thus, rotation of the return pulleys 23,24 in the non-aligned position thereof is possible without any problems.

The mounting brackets 33 of the housing 27 or the return pulley unit 22 are connected to a bushing 49, which is freely rotatably supported on the tensioning shaft 43.

The construction of the conveying unit 15 with the return pulley unit 22 comprising independently adjustable return pulleys .'.'3,24 as described herein make9 it possible to tension the two conveyor belts 17,18 and the auxiliary belt 19, whilst a smooth running of the conveyor belts 17,18 is ensured by the fact that the return pulleys 23,24 can be adjusted independently of each other. The gap between the conveyor belt 17,18 is closed against the ingress of loose Material by the auxiliary belt 19. The return pulley unit 22 can be driven from one end by means or a driving motor (not shown), whilst the auxiliary belt 19 is contact-driven as a result by the conveyor pelt 17,IS. If desired, trip auxiliary belt 19 may be provided with a layer that enhances the frictional contact on the inner side thereof.

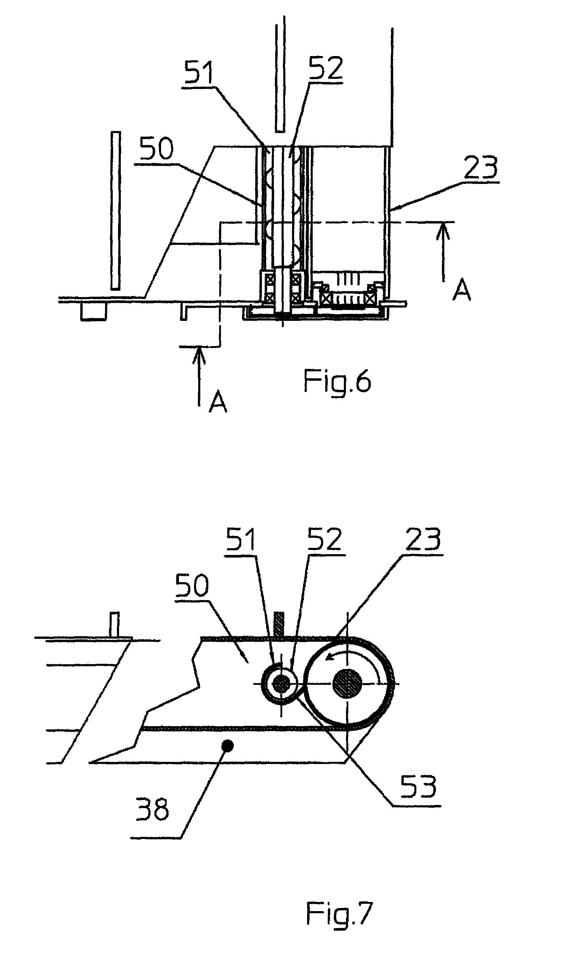

In the illustrated embodiment of the conveying unit, a scraper unit 50, which is shown in more detail in Figs. 6 and 7, is mounted near the return pulley unit 21 disposed at the bottom end of the frame 16. Said scraper unit 15 comprises a housing 51, in which a screw conveyor 52 is rotatably mounted. The screw conveyor 52 is driven by the return pulley unit 21 in a manner that is not shown. The housing 51 has a scraping edge 58, which is at least substantially contiguous to the circumference of the return pulleys 23,24, so that any dirt adhering to said return pulleys will be removed and a correct running of the conveyor belts 17,18 is ensured. The dirt scraped off the return pulleys 23,24 by the scraping edge 53 is discharged from the housing 51 to one of the sides of the conveying unit 15 by the screw conveyor 52. Alternatively, it is possible to use a scraper unit having a scraping edge wherein the removed dirt is discharged under the influence of the force of gravity.

In the foregoing, an exemplary embodiment in the form of a conveying unit for conveying loose material has been described, in particular for use in an apparatus for removing and processing silage, comprising a frame and an endless conveyor belt passed over two return pulleys which are rotatably mounted in the frame, wherein the conveying unit comprises two or more side-by-side endless conveyor belts and wherein an endless auxiliary belt is arranged between two side-by-side conveyor belts, which auxiliary belt closes the gap between the two side-by-side conveyor belts. The conveyor belt may be supported on the facing edges of the two side-by-side conveyor belts. The conveying unit comprises a frame, in which a return pulley unit for the conveyor belts and the auxiliary belt is rotatably supported both at the bottom side and at the upper side of the frame, whilst the spacing between the two return pulley units is adjustable.

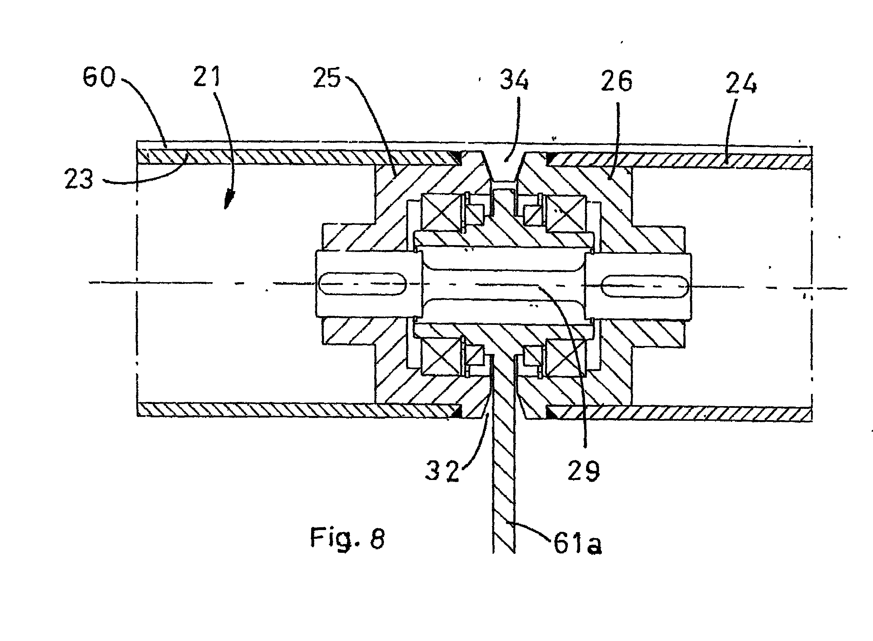

Fig. 8 shows a detail of an advantageous embodiment of the conveying unit, which is of substantially the same construction as the above-discussed conveying unit 15. In this case a single, wide conveyor belt 60 is used instead of two conveyor belts and an auxiliary belt, which conveyor belt 60 is passed over the return pulley units 21,22. Each return pulley unit 21, 22, one of which is shown in Fig. 8, comprises- two return pulleys 23,24, which are coupled in the, above-described manner by a flexible coupling spindle 29 and which are rotatably mounted on the common housing 27 with end parts 25,26 thereof. This embodiment does not comprise a return pulley 30 for the auxiliary belt 19, and the slot 32 is located between the end parts 25,26. In said slot 32, a central V-belt 34 of the conveyor belt 60 is accommodated with some play, so that slipping of the V-belt in said slot is possible and velocity differences caused by the different diameters will not lead to unnecessary wear.

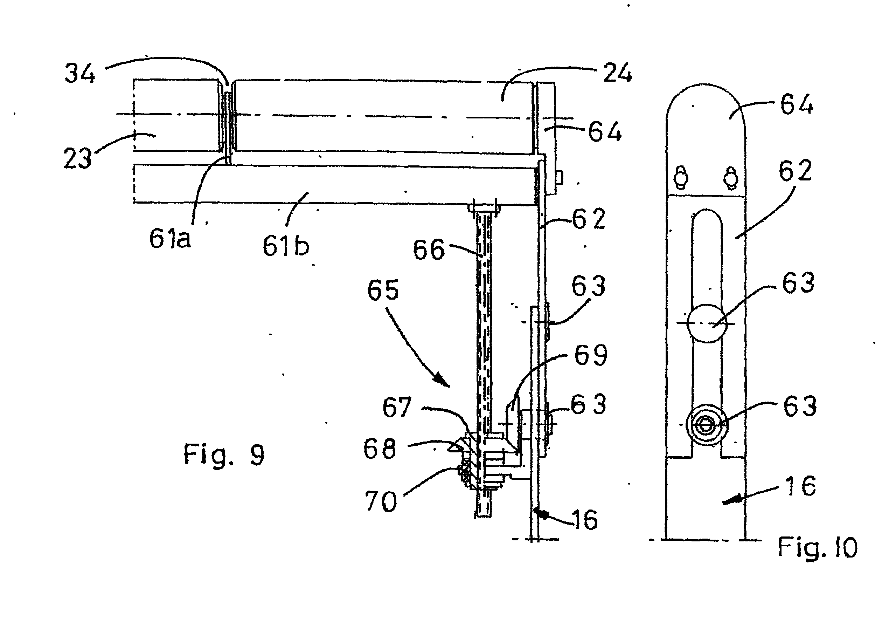

As is apparent from the detail view of Fig. 9, the central Housing 27 is mounted on a supporting beam 61b via a bracket 61a, which supporting beam is in turn connected to two arms 62, which correspond to the side plates 39 of the above-described embodiment. The arms 62 are movably connected to the frame 16, which is provider with cams 63 on either side, which guide the arms 62, as is shown in the side view of Fig. 10. A bearing housing 64 is mounted to the projecting end of each arm 62, in which the ends of the return pulleys 23,24 facing away from each other, and thus the return pulley units 21 or 22 is (are) rotatably mounted. The position of the bearing housings 64 with respect to the arms 62 is adjustable, so that the return pulley unit 21,22 may be cambered slightly.

the tension of the conveyor belt 60 can be adjusted by moving the arms 62 with respect to the frame 16 by means of adjusting elements 65, one of which is shown in Fig. 9. Said adjusting element 65 comprises a threaded end 66, which is attached to the supporting beam 61b and on which a nut 67 is screwed. Said nut is mounted in a gear 68, which is rotatably mounted in a support 70, which is mounted to the frame 16. Said gear 69 can be controlled from outside the frame 16, also if the conveying unit is mounted in the apparatus shown in Fig. 1. An opening may be present in the supporting frame 16' of the apparatus for that purpose. In this way the correct tension of the conveyor belt 60 can be adjusted at all times. Furthermore it is possible to dismount the conveyor belt 60 by returning the adjusting elements 65 fully to their zero position, so that the V-belt 34 becomes disengaged from the groove 32.

In the two above-described embodiments, the return pulleys 23,24 disposed at the bottom side of the conveying unit are mounted in a corresponding manner on a common housing. Said common housing is supported on a supporting beam (not shown) that is mounted in the frame 16. In this way deflection of either one of the two return pulley units is prevented, whilst the diameter of the return pulley unit located at the bottom side may be comparatively small. The advantage of this is that the angle or inclination of the insertion plate 71, in which a space for accommodating the bottom end of the conveying unit is provided, may be comparatively small. This facilitates the insertion of the insertion plate 71 under the silage to be cut out.

It is noted that a return pulley unit may also comprise more than two side-by-side return pulleys instead of two. Furthermore, a separate housing for rotatably supporting the return pulley may be used for each return pulley instead of one common housing disposed between two return pulleys. The housings disposed between the return pulleys are each supported on the supporting beam 61b in that case.

The invention is not restricted to the embodiments described in the foregoing, which can be varied in several ways without departing from the scope of the invention as defined in the claims.

## Claims

1. A conveying unit for conveying loose material, in particular for use in an apparatus for removing and processing silage, comprising a frame and an endless conveyor belt, which is passed over two return pulley units which are rotatably mounted in the frame, **characterized in that** one or both return pulley units is (are) provided with two or more return pulleys arranged side by side, which are coupled at their facing ends and which are each mounted in bearings on a housing disposed between said return pulleys, which housing is supported In the frame.

2. A conveying unit according to claim 1, wherein a slot is present between the two return pulleys of a return pulley unit, through which slot a V-belt provided on the inner side of the conveyor belt- passes with some play.

3. A conveying unit according to claim 1 or 2, wherein the facing ends of said return pulleys are mounted in bearings on a common housing.

4. A conveying unit according to claim 1, 2 or 3, wherein the frame comprises an arm on either side thereof, which arm is movably connected to the frame, one return pulley unit being rotatably supported by said movable arms and one return pulley unit being supported in the frame.

5. A conveying unit according to claim 4, wherein a supporting beam is provided between said movable arms, which supporting beam supports the/each housing.

6. A conveying unit according to claim 4 or 5, wherein the return pulley unit that is supported by the movable arms is rotatably mounted in a bearing housing at its ends, wherein bearing housing is adjustably mounted to the associated movable arms.

7. A conveying unit according to claim 5 or 6, wherein said supporting beam is provided with an adjusting element at each end thereof that is connected to the associated movable arm, which adjusting element is connected to the supporting beam on the one hand and to the frame on the other hand and by means of which the position of the movable arms relative to the frame is adjustable.

8. A conveying unit according to claim 7, wherein each adjusting element can be controlled from outside the frame.

9. A conveying unit according to claim 7 or 8, wherein each adjusting element comprises a threaded end which is attached to the supporting beam, on which threaded end a nut is screwed, which nut is mounted in a gear which is rotatably mounted on a support attached to the frame and which is coupled at right angles to a second gear, which is rotatably mounted in the frame and which can be rotated from outside the frame.

10. A conveying unit according to any one of the preceding claims, wherein a conveyor belt is passed over each return pulley of a return pulley unit, whilst an auxiliary belt is provided, which is supporter the facing edges of the two conveyor belts, closing the gap between the two conveyor belts, with a return pulley for the auxiliary belt being bearing-mounted the housing disposed between said return belts.

11. A conveying unit according to any one of the preceding claims, wherein the facing ends of said return pulleys are coupled by means of a flexible coupling spindle.

12. A conveying unit according to any one of the preceding claims, wherein tension of the conveyor belt (9) on the return pulleys has been set so that the torque which the return pulleys are capable of transmitting to the conveyor belts will at all times be larger than the maximum driving torque that the drive unit is capable of delivering.

13. A conveying unit according to any one of the preceding claims, wherein a scraper unit is mounted near a return pulley unit, which scraper unit comprises a housing having a scraping edge which is at least substantially contiguous to the circumference of the return pulleys, whilst a discharge element, preferably a screw conveyor, is disposed in the housing for discharging scraped-off material, which discharge element, is preferably driven by the associated return pulley unit.

14. An apparatus for removing and processing silage, comprising a mobile chassis with two or more wheels, a removing unit for removing silage from a stock thereof, and a mixing bin for removed silage, **characterised by** a conveying unit according to any one of the preceding claims.

15. An apparatus according to claim 14 comprising a conveying unit according to claim 8, wherein each adjusting element can be controlled when the conveying unit is mounted in the apparatus.
